(19) **Europäisches Patentamt / European Patent Office / Office européen des brevets**

(11) **EP 3 129 273 B1**

(12) **FASCICULE DE BREVET EUROPEEN**

(45) Date de publication et mention
de la délivrance du brevet:
**03.01.2018 Bulletin 2018/01**

(21) Numéro de dépôt: **15719807.8**

(22) Date de dépôt: **07.04.2015**

(51) Int Cl.:
***B62D 5/04*** *(2006.01)*

(86) Numéro de dépôt international:
**PCT/FR2015/050888**

(87) Numéro de publication internationale:
**WO 2015/155455 (15.10.2015 Gazette 2015/41)**

(54) **ESTIMATION DU VIEILLISSEMENT D'UNE DIRECTION ASSISTÉE**

SCHÄTZUNG DER ALTERUNG EINER SERVOLENKUNG

ESTIMATION OF THE AGEING OF POWER-STEERING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2014 FR 1453197**

(43) Date de publication de la demande:
**15.02.2017 Bulletin 2017/07**

(73) Titulaire: **JTEKT Europe**
**69540 Irigny (FR)**

(72) Inventeurs:
• **BOURDREZ, Sébastien**
 **69510 Yzeron (FR)**
• **MOULAIRE, Pascal**
 **69890 La Tour de Salvagny (FR)**
• **PREGNIARD, Romaric**
 **69360 St Symphorien d'Ozon (FR)**
• **RAVIER, Christophe**
 **69780 Saint Pierre de Chandieu (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 1 306 287**

**Description**

La présente invention concerne le domaine technique général des mécanismes équipant des véhicules, notamment des véhicules automobiles.

La présente invention se rapporte plus particulièrement aux systèmes de direction assistée, et notamment aux systèmes de direction à assistance électrique.

Dans le domaine mécanique en général, et automobile en particulier, il est bien connu que les systèmes vieillissent, se dégradent et finissent par être mis au rebut.

De manière générale, les caractéristiques et performances d'un système dépendent donc de l'âge dudit système.

Dans le cas d'un mécanisme de direction assistée, ces caractéristiques et performances sont notamment sensibles à l'altération de certains des matériaux constitutifs des pièces dudit mécanisme (fluage, durcissement ou usure de pièces en caoutchouc, par exemple), à l'apparition de jeux, à la perte ou à l'altération des lubrifiants, ou bien encore aux modifications des frottements internes qui affectent la manoeuvre du mécanisme.

De ce fait, certains réglages initiaux de la direction assistée peuvent devenir inappropriés lorsque le système vieillit.

Ainsi, par exemple, si l'assistance de direction prévoit une loi de compensation de frottement, destinée à améliorer le confort et le ressenti procurés au conducteur, et selon laquelle on ajoute à la consigne de couple, appliquée au moteur d'assistance, une valeur de compensation permettant de compenser sensiblement les effets du frottement interne, il sera nécessaire d'étalonner ladite loi de compensation en fixant ladite valeur de compensation à partir d'une mesure d'effort de frottement réalisée lors d'un essai.

Généralement, la valeur de compensation est fixée une fois pour toutes, ce qui conduit à utiliser une loi de compensation invariante.

Or, le frottement qui affecte réellement le mécanisme de direction est amené à varier, de manière non négligeable, au cours de la vie du mécanisme de direction. En pratique, ce frottement tend généralement à diminuer avec le vieillissement et l'usure dudit mécanisme.

Par conséquent, si la loi de compensation est réglée d'après une valeur de compensation mesurée sur un mécanisme neuf, alors la compensation deviendra trop importante une fois le rodage effectué. Inversement, si la loi de compensation est réglée d'après une valeur qui provient d'une mesure effectuée sur un mécanisme de direction rodé, alors la compensation sera insuffisante sur un véhicule neuf.

Par ailleurs, on notera que, sauf à réaliser périodiquement des inspections et des essais approfondis sur le véhicule, il est particulièrement malaisé d'estimer objectivement le vieillissement d'un mécanisme de direction.

A ce titre, on remarquera notamment que le kilométrage du véhicule n'est guère représentatif du vieillissement du mécanisme de direction.

En effet, si l'on considère d'une part un premier véhicule essentiellement consacré aux longs trajets routiers sur autoroute et d'autre part un second véhicule d'auto-école servant quotidiennement à des exercices de rangement en créneau, on comprendra aisément que, pour un kilométrage identique, l'usure et le vieillissement du mécanisme de direction seront bien plus importants dans le second cas que dans le premier.

Par ailleurs, on connaît, par le document EP-1 306 287, un procédé de détermination du degré d'usure d'un moteur électrique de direction assistée.

Les objets assignés à l'invention visent par conséquent à remédier aux inconvénients susmentionnés et à proposer un nouveau procédé permettant d'estimer de façon simple, efficace et fiable le degré de vieillissement d'un mécanisme, et en particulier d'un mécanisme de direction.

Les objets assignés à l'invention sont atteints au moyen d'un procédé d'estimation du vieillissement d'un mécanisme de direction caractérisé en ce que l'on évalue le vieillissement du mécanisme de direction en calculant une valeur dite « valeur de vieillissement » selon une fonction de vieillissement qui correspond à l'intégrale, sur le temps, d'une expression qui est pondérée par un indicateur de contrainte dont la valeur à chaque instant considéré est représentative de l'intensité d'un effort de sollicitation qui est subi par ledit mécanisme de direction audit instant considéré.

Avantageusement, en intégrant sur le temps, c'est-à-dire sur une durée donnée (période d'intégration), une expression (intégrande) qui est pondérée par, voire égale à, un indicateur de contrainte représentatif des sollicitations mécaniques instantanées subies par le mécanisme de direction au cours de ladite période d'intégration, et plus particulièrement représentatif des efforts d'entraînement (ou de retenue en position) exercés par le ou les organes actionneurs de la direction (volant de conduite et/ou moteur d'assistance) sur la chaîne cinématique d'entraînement qui relie lesdits organes actionneurs aux roues directrices, le procédé permet d'évaluer de manière très objective le vieillissement du mécanisme de direction sur ladite période d'intégration.

Les inventeurs ont en effet découvert que le vieillissement du mécanisme de direction, et notamment l'usure et le degré de frottement interne affectant le déplacement des organes mobiles dudit mécanisme de direction, étaient étroitement liés à l'accumulation, au fil du temps, des effets des contraintes successives de manoeuvre dudit mécanisme (ici les contraintes de manoeuvre de braquage).

En utilisant, dans la fonction de vieillissement, un indicateur de contrainte dont la valeur instantanée varie au cours du temps, du fait que ladite valeur "suit" en permanence, sensiblement en temps réel, le degré des efforts (eux-mêmes variables) qui sont appliqués au mécanisme de direction pour manoeuvrer ce dernier, on prend avantageusement en considération, de manière précise et complète, l'ensemble des efforts de manoeuvre réellement et successivement subis par le mécanisme de direction sur toute la durée de la période d'intégration considérée, tant en fréquence qu'en intensité.

En outre, du fait que l'intégrale utilisée par la fonction de vieillissement associe (par multiplication) une durée (élémentaire) à chaque valeur instantanée successivement prise par l'indicateur de contrainte, on pondère en pratique, lors de l'intégration, chaque valeur successive d'intensité d'effort de manoeuvre par la durée pendant laquelle cet effort s'est exercé.

Ainsi, en utilisant une fonction d'intégration, on peut avantageusement quantifier l'effet cumulé (en intensité et en durée) des efforts de manoeuvre subis par le mécanisme de direction sur toute la période d'intégration considérée.

En définitive, le procédé conforme à l'invention permet donc avantageusement d'établir une estimation particulièrement fiable de l'effet de vieillissement en fatigue subi par le mécanisme de direction sur la période d'intégration considérée, dans la mesure où une telle estimation est fidèlement et finement représentative de l'usage effectif qui a été fait dudit mécanisme de direction sur ladite période d'intégration, depuis l'origine de ladite période d'intégration jusqu'à son terme.

En initialisant le calcul de la fonction de vieillissement, c'est-à-dire en fixant l'origine de la période d'intégration, à la première mise en circulation du véhicule, et en considérant que le terme de ladite période d'intégration correspond à l'instant présent auquel on réalise le calcul de la fonction de vieillissement, on peut avantageusement obtenir, grâce au procédé conforme à l'invention, un indicateur précis et fiable de l'âge global (absolu) du mécanisme de direction.

Par ailleurs, la mise en oeuvre du procédé est particulièrement simple et rapide, dans la mesure notamment où l'indicateur de contrainte peut être obtenu à partir de données déjà disponibles à tout moment dans le calculateur de direction assistée, telles que, typiquement, la consigne de couple appliquée au moteur d'assistance et/ou la mesure du couple volant exercé par le conducteur sur le volant de conduite.

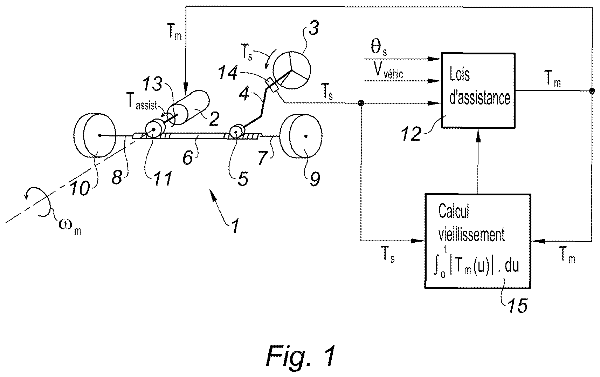

D'autres objets, caractéristiques et avantages de l'invention apparaîtront plus en détail à la lecture de la description qui suit, ainsi qu'à l'aide de la figure 1 annexée, fournie à titre purement illustratif et non limitatif, qui représente schématiquement la mise en oeuvre, selon l'invention, d'un procédé d'estimation du vieillissement d'une direction assistée.

La présente invention concerne un procédé d'estimation du vieillissement d'un mécanisme de direction 1, et plus particulièrement d'un mécanisme 1 de direction assistée.

Tel que cela est illustré sur la figure 1, le mécanisme de direction 1 comprend avantageusement au moins un organe actionneur 2, 3, du genre volant de conduite 3 et/ou, de préférence, moteur d'assistance 2, organe actionneur 2, 3 qui est relié à au moins un organe effecteur, du genre roue directrice 9, 10, par au moins une chaîne cinématique d'entraînement 4, 5, 6, 7, 8, 11.

On entend ici par « organe actionneur » 2, 3 un organe conçu pour manoeuvrer activement la direction, c'est-à-dire qui permet d'appliquer intentionnellement au mécanisme de direction 1 un effort de manoeuvre déterminé (manuel et/ou motorisé) afin de contrôler l'angle de braquage de ladite direction, et plus particulièrement la position angulaire en lacet d'un ou plusieurs organe effecteurs 9, 10, du genre roues directrices, distants et distincts dudit organe actionneur 2, 3 et montés mobile par rapport au châssis du véhicule, et ce de manière à pouvoir contrôler la trajectoire dudit véhicule.

Bien qu'il ne soit pas exclu, dans l'absolu, d'utiliser le procédé selon l'invention pour évaluer le vieillissement d'une direction à commande exclusivement manuelle, on considéra dans ce qui suit, que, selon une variante de réalisation particulièrement préférentielle, le mécanisme de direction assistée 1 est équipé d'un moteur d'assistance 2, destiné à fournir un effort d'assistance $T_{assist}$ pour manoeuvrer ledit mécanisme de direction.

On peut indifféremment envisager tout type de moteur d'assistance 2, et plus particulièrement tout type de moteur d'assistance à double sens de fonctionnement.

En particulier, l'invention peut tout aussi bien s'appliquer à un moteur d'assistance 2 rotatif, destiné à exercer un effort d'assistance $T_{assist}$ de type couple, qu'à un moteur d'assistance 2 linéaire, destiné à exercer un effort d'assistance $T_{assist}$ de type traction ou compression.

Par ailleurs, ledit moteur d'assistance 2 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 2 sera un moteur électrique rotatif, par exemple de type « brushless ».

Par ailleurs, le mécanisme de direction assistée 1 comprend de préférence, de manière connue en soi, un volant de conduite 3 par lequel le conducteur du véhicule peut entraîner en rotation une colonne de direction 4 qui engrène, au moyen d'un pignon de direction 5, sur une crémaillère de direction 6 montée coulissante dans un carter de direction solidaire du châssis du véhicule.

Les extrémités de la crémaillère de direction 6 sont de préférence reliées chacune, par l'intermédiaire d'une biellette de direction 7, 8, à un porte-fusée orientable en lacet, sur lequel est monté une roue directrice (et préférentiellement motrice) 9, 10 du véhicule, de telle manière que le déplacement de la crémaillère 6 en translation dans le carter provoque une modification de l'angle de braquage (i.e. de l'orientation en lacet) desdites roues directrices 9, 10.

Le moteur d'assistance 2 (et plus particulièrement l'arbre 13 dudit moteur d'assistance) peut venir en prise sur la colonne de direction 4 elle-même, par exemple par l'intermédiaire d'un réducteur à roue tangente et vis sans fin, ou bien encore venir en prise directement sur la crémaillère de direction 6, par un mécanisme d'entraînement de type vis à billes ou bien *via* un pignon moteur 11 distinct du pignon 5 de la colonne de direction (pour former alors un mécanisme de direction dit « à double pignon », tel que celui schématisé sur la figure 1).

A titre d'exemple, sur la variante de réalisation à double pignon illustrée sur la figure 1, on peut considérer que la chaîne cinématique d'entraînement « manuel » qui relie le volant de conduite 3 aux roues 9, 10 inclut la colonne de direction 4, le pignon de direction 5, la crémaillère 6, et les biellettes 7, 8, tandis que la chaîne cinématique d'entraînement « motorisé » qui relie le moteur d'assistance 2 à ces mêmes roues inclut le pignon moteur 11, la crémaillère 6, et les biellettes 7, 8.

La consigne d'effort (ou, plus préférentiellement, la consigne de couple) $T_m$ qui est appliquée au moteur d'assistance 2 afin que ledit moteur assiste le conducteur dans la manoeuvre du mécanisme de direction 1 dépend de lois d'assistance prédéterminées, stockées dans une mémoire non volatile d'un calculateur (ici un module d'application de lois d'assistance 12), lesdites lois d'assistance pouvant ajuster ladite consigne d'effort $T_m$ en fonction de divers paramètres tels que le couple volant $T_s$ exercé par le conducteur sur le volant de conduite 3, la vitesse (longitudinale) $V_{véhic}$ du véhicule, la position angulaire $\theta_s$ du volant de conduite 3, etc.

Selon l'invention, on évalue le vieillissement du mécanisme de direction en calculant une valeur dite « valeur de vieillissement » selon une fonction de vieillissement (notée « old », « old2 » ou « ene » dans ce qui suit) qui correspond à l'intégrale, sur le temps (et plus particulièrement sur la période d'intégration égale à l'intervalle [0, t]), d'une expression qui est pondérée par un indicateur de contrainte $T_m(u)$, $T_s(u)$ dont la valeur à chaque instant $u$ considéré est représentative de l'intensité (en valeur absolue) d'un effort de sollicitation $T_m$, $T_s$ qui est subi par ledit mécanisme de direction 1 audit instant $u$ considéré.

Plus particulièrement, on pourra ainsi évaluer le vieillissement du mécanisme de direction 1 en calculant une fonction de vieillissement old, old2, ene qui correspond à l'intégrale, sur le temps, d'une expression qui est pondérée par un indicateur de contrainte dont la valeur à chaque instant considéré est représentative du niveau (degré) de contrainte dans lequel la chaîne cinématique d'entraînement, et plus particulièrement la crémaillère de direction 6, se trouve audit instant considéré.

Avantageusement, tel que cela a été mentionné plus haut, l'utilisation originale, comme indicateur de vieillissement (et donc comme indicateur d'âge) d'un mécanisme 1, de l'intégrale temporelle d'une expression contenant un facteur (indicateur de contrainte) représentatif de l'intensité des efforts instantanés exercés sur ledit mécanisme de direction permet une évaluation fiable et réaliste du vieillissement qui est lié à la fatigue mécanique subie par ledit mécanisme.

Avantageusement, l'utilisation d'une intégrale permet notamment de cumuler (sommer) dans le temps les contributions au vieillissement de tous les efforts (de toutes les différentes intensités de l'effort considéré) qui se succèdent au fil du temps, ce qui permet d'obtenir une évaluation du vieillissement fidèle à l'historique effectif des sollicitations qui sont appliquées au mécanisme de direction 1 (ici l'historique du ou des efforts de manoeuvre).

Tel que cela est illustré sur la figure 1, l'étape (a) de calcul d'intégrale, selon le procédé conforme à l'invention, peut être réalisée par un module de calcul de vieillissement 15.

Avantageusement, la possibilité de rafraîchir le calcul de l'intégrale à tout instant $t$ (de préférence à partir d'une origine $0$ fixée, invariante), permet d'actualiser à tout moment l'évaluation du vieillissement, et donc de connaître précisément, en permanence, l'âge exact du mécanisme 1.

Le procédé permet donc, ici encore, de quantifier précisément l'âge du mécanisme 1, et de décider en conséquence d'actions automatiques, à partir de cette valeur d'âge estimée.

Par exemple, on pourra prévoir des actions de correction des lois d'assistance ou bien encore des actions d'avertissement destinées à signaler au conducteur la nécessité de procéder à une maintenance de la direction ou d'autres pièces du train roulant du véhicule.

Selon la configuration du mécanisme de direction 1, et plus particulièrement selon la configuration des organes actionneurs 2, 3, l'indicateur de contrainte $T_m(u)$, $T_s(u)$ pourra être une mesure ou une estimation de couple (notamment de couple de torsion destiné à entraîner la pièce considérée en rotation autour de son axe), ou bien, de manière équivalente, une mesure ou une évaluation d'effort linéaire (par exemple un effort de traction/compression longitudinale exercé sur la crémaillère de direction 6).

De préférence, l'indicateur de contrainte $T_m(u)$, $T_s(u)$ est représentatif de l'intensité de l'effort de manoeuvre $T_m$, $T_s$ qui est exercé par un organe actionneur 2, 3, ou, respectivement, de l'intensité (le cas échéant cumulée) des efforts de manoeuvre $T_m$, $T_s$ qui sont exercés simultanément par plusieurs des organes actionneurs 2, 3 sur la chaîne cinématique d'entraînement.

A ce titre, l'indicateur de contrainte $T_m(u)$, $T_s(u)$ peut de préférence être choisi parmi : la consigne de couple $T_m$ qui est appliquée au moteur d'assistance 2, la mesure du couple d'assistance $T_{assist}$ qui est effectivement délivré par le moteur d'assistance 2, ou la mesure du couple volant $T_s$ qui est exercé par le conducteur sur le volant de conduite 3.

Avantageusement, ces signaux sont tout d'abord représentatifs des sollicitations mécaniques auxquelles est soumis le mécanisme de direction 1, lorsque l'on cherche à modifier l'angle de braquage ou encore lorsque l'on retient ledit mécanisme dans l'angle de braquage souhaité, à l'encontre par exemple des contraintes externes qui s'exercent sur les pneumatiques des roues 9, 10.

En outre, ces signaux sont facilement accessibles et exploitables, car déjà communément disponibles dans le calculateur qui gère la direction assistée.

Ainsi, par exemple, la valeur de consigne de couple moteur $T_m$ pourra être obtenue en sortie du module d'application de lois d'assistance 12, tel que cela est illustré sur la figure 1.

La mesure du couple (électromagnétique) d'assistance $T_{assist}$ pourra être fournie par un capteur de couple idoine, de préférence intégré au contrôleur du moteur d'assistance 2.

La mesure du couple volant $T_s$ pourra être obtenue par un capteur de couple volant 14 approprié, tel qu'un capteur magnétique de couple mesurant les déformations élastiques d'une barre de torsion placée entre le volant de conduite 3 et la colonne de direction 4.

En pratique, on remarquera par ailleurs que, dans la plupart des situations de vie envisagées pour le véhicule, la valeur de la consigne $T_m$ appliquée au moteur d'assistance 2 et la valeur de l'effort d'assistance $T_{assist}$ qui est effectivement fourni par ledit moteur d'assistance 2 (en application de la consigne susmentionnée), sont extrêmement proches, voire égales, de telle sorte que ces deux signaux $T_m$, $T_{assist}$ peuvent être utilisés de manière équivalente dans le cadre de l'invention.

Par commodité de description, on pourra donc faire référence indifféremment à l'un ou l'autre de ces deux signaux dans ce qui suit, ou assimiler un signal à l'autre, notamment pour leur usage en tant qu'indicateur de contrainte.

Selon une possibilité de mise en oeuvre qui simplifie et accélère les mesures et les calculs, l'intégrande de la fonction de vieillissement choisie, c'est-à-dire l'expression que l'on intègre sur le temps lors de l'étape (a) de calcul de vieillissement par intégrale, peut se limiter au seul indicateur de contrainte lui-même $T_m(u)$, $T_s(u)$.

De préférence, le mécanisme de direction 1 comprenant un moteur d'assistance 2, on pourra calculer une valeur de vieillissement selon une première fonction de vieillissement « old » représentative du vieillissement relatif à l'action du moteur d'assistance 2, ladite première fonction de vieillissement étant donnée par :

$$old(t) = \int_0^t |T_m(u)| du \quad , \text{ où } T_m(u) \text{ représente la consigne}$$

de couple moteur $T_m$ appliquée au moteur d'assistance 2, ou bien, respectivement, la mesure du couple d'assistance $T_{assist}$ délivré par le moteur d'assistance, à l'instant u.

Cette première fonction de vieillissement « old », dont l'intégrande se limite à une valeur (variable dans le temps) représentative du couple $T_{assist}$, $T_m$ fourni

par le moteur d'assistance 2, permet avantageusement de prendre en considération, dans le calcul du vieillissement, la contribution de l'effort de manoeuvre motorisé, exercé par le moteur d'assistance 2 sur le mécanisme de direction 1.

A ce titre, on notera que, l'effort d'assistance $T_{assist}$, $T_m$ fourni par le moteur 2 étant généralement nettement supérieur à l'effort manuel $T_s$ exercé par le conducteur sur le volant de conduite 3, cet effort « motorisé » d'assistance représente en pratique la principale source de vieillissement en fatigue du mécanisme 1.

La première fonction de vieillissement « old » proposée peut donc être, à elle seule, significativement représentative du vieillissement effectif du mécanisme 1 de direction.

Alternativement à, ou en complément de, cette prise en considération de la contribution de l'effort de manoeuvre (d'assistance) $T_{assist}$, $T_m$ motorisé au vieillissement, on pourra prendre en considération la contribution au vieillissement propre à l'effort de manoeuvre manuel $T_s$.

A ce titre, le mécanisme de direction comprenant un volant de conduite 3, on pourra calculer une valeur de vieillissement selon une seconde fonction de vieillissement « old2 » représentative du vieillissement relatif à l'action du volant de conduite 3, ladite seconde fonction de vieillissement étant donnée par :

$$old2(t) = \int_0^t |T_s(u)| du \text{ , où } T_s(u) \text{ représente la mesure}$$

à l'instant u du couple volant $T_s$ qui est exercé par le conducteur sur le volant de conduite 3.

Cette seconde fonction de vieillissement, dont l'intégrande se limite ici à l'indicateur de contrainte représentatif du (seul) couple volant $T_s$, permet avantageusement de prendre en considération la contribution des efforts manuels de manoeuvre au processus de vieillissement, notamment pour évaluer le vieillissement des portions du mécanisme de direction qui ne sont pas soumises à l'action du moteur d'assistance 2.

En l'absence d'assistance de direction, voire en l'absence de moteur d'assistance 2, cette seconde fonction de vieillissement « old2 » pourra être représentative à elle seule du vieillissement du mécanisme 1.

Dans le cas d'un mécanisme de direction 1 pourvu d'un moteur d'assistance 2 activement utilisé, cette seconde fonction de vieillissement « old2 » pourra être utilisée en complément de la première fonction de vieillissement « old », de manière à ce que le calcul du vieillissement gagne en précision en prenant en considération à la fois la contribution des efforts motorisés (par la première fonction « old ») et la contribution des efforts manuels (par la seconde fonction « old2 »).

A ce titre, on notera que, en pratique, les contributions respectives (au vieillissement du mécanisme de direction 1) des efforts motorisés et des efforts manuels pouvant être très différentes, on calculera de préférence la première fonction de vieillissement « old » et la seconde fonction de vieillissement « old2 » séparément (indépendamment) l'une de l'autre, de manière à pouvoir surveiller parallèlement l'évolution indépendante de chacune de ces deux fonctions de vieillissement.

Néanmoins, dans une autre hypothèse où l'on envisagerait malgré tout de calculer la somme des contributions respectives des premières et seconde fonctions de vieillissement « old » et « old2 » pour évaluer directement un vieillissement global, on notera que, dans l'absolu, on pourrait indifféremment, du fait de la distributivité de l'intégrale, soit sommer les première et second fonctions de vieillissement (old + old2) après les avoir calculées l'une séparément de l'autre, soit effectuer directement le calcul intégral d'un intégrande utilisant un indicateur de contrainte qui est (déjà) égal à la somme $(T_s + T_m)$ du couple volant et du couple d'assistance délivré par le moteur.

Selon une possibilité de mise en oeuvre du procédé, on calcule une valeur de vieillissement selon une fonction de vieillissement dont l'intégrande contient le produit (et de préférence se limite exclusivement au produit) d'une part d'un indicateur de contrainte $T_m(u)$, $T_s(u)$ représentatif de l'intensité de l'effort, et plus particulièrement représentatif de l'intensité du couple, exercé par un organe actionneur 2, 3 du mécanisme de direction 1, tel que le volant de conduite 3 et/ou le moteur d'assistance 2, et d'autre part de la vitesse de déplacement (dans le référentiel attaché au véhicule et au carter de direction), et plus particulièrement de la vitesse de rotation $\omega_m$, dudit organe actionneur 2, 3.

Avantageusement, un tel produit effort x vitesse (linéaire) de déplacement, et plus particulièrement couple x vitesse (angulaire) de rotation, correspond à la puissance instantanée apportée par l'organe actionneur 2, 3 au mécanisme de direction 1.

De la sorte, l'intégrale sur le temps d'une telle expression permet d'évaluer l'énergie mécanique apportée audit mécanisme 1 sur toute la durée de la période d'intégration.

L'invention permet donc avantageusement de calculer le vieillissement en tenant compte non seulement de l'intensité des efforts appliqués au mécanisme de direction et de leur accumulation dans le temps, mais également de la situation dynamique selon laquelle ces efforts sont administrés au mécanisme de direction 1.

L'estimation du vieillissement peut donc gagner en précision, du fait que le vieillissement dépend en pratique également de cette dynamique.

A titre d'exemple, on comprendra en effet qu'un couple moteur appliqué sur un mécanisme de direction 1 bloqué (par exemple parce que ledit mécanisme est parvenu à sa limite de course ou bien parce que l'une des roues 9, 10 bute contre un obstacle) aura tendance à choquer ou à forcer ledit mécanisme 1 et n'aura donc pas le même impact en termes de déformation et de fatigue que si ce même couple est appliqué sur un mécanisme 1 en mouvement pendant une manoeuvre de braquage libre.

De préférence, si l'organe actionneur considéré est le moteur d'assistance 2, on pourra plus particulièrement calculer une valeur de vieillissement selon une troisième fonction de vieillissement (ene) représentative de l'énergie délivrée par le moteur d'assistance 2, ladite troisième fonction de vieillissement étant donnée par:

$$ene(t) = \int_0^t \left| T_m(u) \cdot \omega_m(u) \right| du \, ,$$ où $T_m(u)$ représente

la consigne de couple moteur ou bien la mesure du couple d'assistance délivré par le moteur d'assistance 2 à l'instant $\underline{u}$, et $\omega_m(u)$ représente la vitesse de rotation de l'arbre 13 du moteur d'assistance 2 à ce même instant $\underline{u}$.

Ainsi, on pourra avantageusement calculer l'intégrale temporelle de la puissance instantanée délivrée par le moteur d'assistance 2, c'est-à-dire la quantité d'énergie qui aura été "injectée" par le moteur d'assistance dans le mécanisme de direction 1 et transmise (et dissipée en partie) par la chaîne cinématique d'entraînement, sur toute la période d'intégration considérée, et plus particulièrement depuis le tout premier démarrage dudit moteur d'assistance 2.

De façon particulièrement préférentielle, et ce quelle que soit par ailleurs la fonction de vieillissement ou la combinaison de fonctions de vieillissement considérée, on évalue le vieillissement absolu du mécanisme de direction en effectuant le calcul intégral de la fonction de vieillissement sur une période temporelle [0, t] globale dont l'origine $\underline{0}$ correspond à la première mise en service du mécanisme de direction 1, ou, plus particulièrement, à la première mise en circulation du véhicule qu'équipe ledit mécanisme de direction.

Ainsi, on pourra évaluer l'âge total (absolu) du mécanisme de direction, depuis le zéro temporel absolu associé à la première mise en service du mécanisme 1 jusqu'à l'instant présent $\underline{t}$ où l'on arrête le calcul intégral.

Avantageusement, le résultat du calcul de la fonction de vieillissement (valeur de vieillissement) sera stocké dans une mémoire non volatile, de manière à ce que le calcul du vieillissement puisse être conservé pendant les phases d'arrêt du véhicule et poursuivi cumulativement (sans être réinitialisé) à chaque nouveau démarrage du véhicule.

L'invention concerne aussi, plus globalement, un procédé de gestion d'une direction assistée selon lequel on détermine l'âge du mécanisme 1 de ladite direction assistée au moyen d'un procédé d'estimation du vieillissement selon l'une quelconque des caractéristiques décrites dans ce qui précède puis l'on adapte, en fonction de cet âge déterminé, au moins une loi d'assistance et/ou un modèle de frottement utilisé par une loi d'assistance de ladite direction assistée.

En d'autres termes, on utilisera avantageusement la valeur de vieillissement comme paramètre modificatif d'une ou plusieurs lois d'assistance, et/ou d'un modèle de frottement permettant d'évaluer le frottement interne qui s'oppose aux manoeuvres de la direction, et ce afin de pouvoir ajuster dynamiquement, au fil du temps, la gestion de la direction assistée en fonction de l'âge réel du mécanisme 1.

En particulier, on pourra ainsi par exemple réduire progressivement la compensation des frottements avec le vieillissement croissant du mécanisme 1.

Bien entendu, le nombre et la nature des lois d'assistance sensibles au vieillissement, qui pourront être modifiées volontairement en fonction de la valeur de vieillissement qui est renvoyée par une ou plusieurs fonctions de vieillissement selon l'invention, ne sont nullement limités.

Ainsi, par exemple, en complément de, ou en alternative à, l'adaptation des lois d'assistance mentionnées ci-dessus, on pourra également prévoir d'adapter, en fonction de l'âge du mécanisme de direction déterminé selon l'invention, au moins un abaque d'élasticité qui caractérise (par exemple sous forme d'une courbe ou d'une cartographie) la raideur d'un organe mobile du mécanisme de direction 1, tel que le volant de conduite 3, la crémaillère 6, l'arbre 13 du moteur d'assistance 2, la colonne de direction 4, et les pignons 5, 11 correspondants, et/ou la raideur de la liaison cinématique entre deux organes mobiles du mécanisme de direction, par exemple la liaison entre la colonne de direction 4 et la crémaillère 6, le pignon de direction 5, ou la liaison entre l'arbre 13 du moteur d'assistance et la crémaillère 6, via le pignon moteur 11.

On désigne ici par « raideur », au sens de la caractéristique d'un élément de type ressort, le rapport entre d'une part la variation de l'effort, ou du couple, subi par l'organe mobile considéré ou transmis par la liaison considérée et d'autre part la déformation élastique correspondante dudit organe, respectivement de ladite liaison.

Avantageusement, un abaque d'élasticité permettra de prendre en considération les déformations élastiques sous contraintes des organes mobiles et/ou des liaisons cinématiques formées entre lesdits organes mobiles, lorsque l'on calculera la position d'un organe mobile du mécanisme de direction 1 à partir de la connaissance (mesure ou estimation) de la position d'un autre organe mobile appartenant à la même chaîne cinématique, et plus globalement au même mécanisme de direction 1.

Ainsi, on pourra par exemple estimer avec une grande précision, en fonction de l'état de contrainte exercé sur le mécanisme de direction 1, et notamment en fonction du couple exercé par le moteur d'assistance 2 et/ou du couple exercé manuellement par le conducteur sur le volant de conduite 3, la position de la crémaillère 6 et/ou la position du volant de conduite 3 à partir de la position angulaire absolue mesurée de l'arbre 13 du moteur d'assistance 2, en connaissant les rapports d'engrenage (les rapports de transmission) des pignons 5, 11 sur la crémaillère 6, ainsi que les déformations élastiques induites respectivement au niveau des liaisons successives entre l'arbre 13 du moteur et la crémaillère 6, puis entre la crémaillère 6 et la colonne de direction 4.

Plus particulièrement, si l'on considère une liaison qui couple un premier organe mobile à un second organe mobile, la position du second organe mobile pourra être calculée en multipliant la position du premier organe mobile par le rapport de transmission (théorique et idéal) de ladite liaison, puis en ajoutant la déviation qui correspond à la déformation élastique de ladite liaison, déviation qui est calculée à partir d'une part de l'effort (typiquement le couple moteur), mesuré ou estimé, qui est transmis par ladite liaison, et d'autre part de la raideur de ladite liaison, fournie par l'abaque d'élasticité.

On notera que, par commodité, toutes les positions pourront être exprimées sous forme d'une position angulaire équivalente, en référence à la position angulaire de l'arbre 13 du moteur et/ou à la position angulaire du volant de conduite 3.

Avantageusement, l'adaptation, c'est-à-dire la mise à jour, du ou des abaques d'élasticité en fonction de l'âge du mécanisme de direction 1 permet de conserver, tout au long de la vie du véhicule, une bonne précision lors du calcul de la position d'un organe mobile, notamment du fait que l'on tient ainsi compte des effets de l'usure, parmi lesquels l'apparition progressive de jeux et la réduction des frottements dans les liaisons, qui modifient le comportement élastique, et plus particulièrement la raideur, de la liaison considérée (ou du tronçon de chaîne cinématique considéré), et par conséquent le tracé de l'abaque d'élasticité applicable.

Par ailleurs, l'invention concerne également en tant que tel un module d'évaluation du vieillissement 15, formé par un circuit électronique, une carte électronique, un calculateur (ordinateur), un automate programmable, ou tout autre dispositif équivalent, et qui pourra présenter une structure de commande physique, liée au câblage de ses composants électroniques, et/ou, de préférence, une structure de commande virtuelle, définie par une programmation informatique, de manière à pouvoir mettre en oeuvre un procédé conforme à l'invention.

L'invention concerne également en tant que tel un support de données lisible par un ordinateur et contenant des éléments de code de programme informatique assurant l'exécution d'un procédé selon l'une quelconque des caractéristiques décrites dans ce qui précède lorsque ledit support est lu par un ordinateur.

L'invention concerne enfin un véhicule automobile, notamment à roues directrices, éventuellement motrices, équipé d'un système de direction assistée piloté par un module de commande (de type calculateur) conçu pour mettre en oeuvre un procédé selon l'une quelconque des caractéristiques susmentionnées.

Bien entendu, l'invention n'est par ailleurs nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

En particulier, il est parfaitement envisageable de généraliser le principe du calcul de vieillissement par intégration des contraintes sur le temps à tout autre mécanisme, et notamment à tout mécanisme de véhicule automobile, comprenant des organes mobiles mus par des organes actionneurs, manuels ou motorisés, de toute nature.

**Revendications**

1. Procédé de gestion d'une direction assistée comprenant un mécanisme de direction (1), procédé de gestion au cours duquel l'on détermine l'âge dudit mécanisme de direction (1) au moyen d'un procédé d'estimation du vieillissement selon lequel on calcule une valeur dite « valeur de vieillissement » selon une fonction de vieillissement (old, old2, ene) qui correspond à l'intégrale, sur le temps, d'une expression qui est pondérée par un indicateur de contrainte ($T_m(u)$, $T_s(u)$) dont la valeur à chaque instant (u) considéré est représentative de l'intensité d'un effort de sollicitation ($T_m$, $T_s$) qui est subi par ledit mécanisme de direction (1) audit instant considéré, ledit procédé de gestion étant **caractérise en ce que** l'on adapte ensuite, en fonction de l'âge ainsi déterminé, au moins une loi d'assistance et/ou un modèle de frottement utilisé par une loi d'assistance de ladite direction assistée, et/ou au moins un abaque d'élasticité qui caractérise la raideur d'un organe mobile du mécanisme de direction (1) et/ou la raideur de la liaison cinématique entre deux organes mobiles du mécanisme de direction.

2. Procédé selon la revendication 1 **caractérisé en ce que** l'on utilise la valeur de vieillissement comme paramètre modificatif d'un modèle de frottement permettant d'évaluer le frottement interne qui s'oppose aux manoeuvres de la direction, afin d'ajuster dynamiquement, au fil du temps, en fonction de l'âge du mécanisme (1), une compensation du frottement, de préférence en réduisant ladite compensation de frottement avec le vieillissement croissant du mécanisme.

3. Procédé selon la revendication 1 ou 2 **caractérisé en ce que**, le mécanisme de direction (1) comprenant au moins un organe actionneur (2, 3), du genre volant de conduite (3) et/ou moteur d'assistance (2), qui est relié à au moins un organe effecteur (9, 10), du genre roue directrice, par au moins une chaîne cinématique d'entraînement (4, 5, 6, 7, 8, 11), l'indicateur de contrainte ($T_m(u)$, $T_s(u)$) est représentatif de l'intensité de l'effort de manoeuvre ($T_m$, $T_s$) qui est exercé par un organe actionneur (2), ou, respectivement, de l'intensité des efforts de manoeuvre qui sont exercés simultanément par plusieurs des organes actionneurs (2, 3), sur la chaîne cinématique d'entraînement, ledit indicateur de contrainte étant de préférence choisi parmi : la consigne de couple ($T_m$) qui est appliquée au moteur d'assistance (2), la mesure du couple d'assistance ($T_{assist}$) qui est effectivement délivré par le moteur d'assistance (2), ou la mesure du couple volant ($T_s$) qui est exercé par le conducteur sur le volant de conduite (3).

4. Procédé selon l'une des revendications précédentes **caractérisé en ce que**, le mécanisme de direction (1) comprenant un moteur d'assistance (2), on calcule une valeur de vieillissement selon une première fonction de vieillissement (old) représentative du vieillissement relatif à l'action du moteur d'assistance (2), ladite première fonction de vieillissement étant donnée par: $old(t) = \int_0^t |T_m(u)| du$ , où $T_m(u)$ représente la consigne de couple moteur appliquée au moteur d'assistance (2), ou bien la mesure du couple d'assistance délivré par le moteur d'assistance (2), à l'instant u.

5. Procédé selon l'une des revendications précédentes **caractérisé en ce que**, le mécanisme de direction (1) comprenant un volant de conduite (3), on calcule une valeur de vieillissement selon une seconde fonction de vieillissement (old2) représentative du vieillissement relatif à l'action du volant de conduite (3), ladite seconde fonction de vieillissement étant donnée par : $old2(t) = \int_0^t |T_s(u)| du$ , où $T_s(u)$ représente la mesure à l'instant u du couple volant qui est exercé par le conducteur sur le volant de conduite (3).

6. Procédé selon l'une des revendications précédentes **caractérisé en ce que** l'on calcule une valeur de vieillissement selon une fonction de vieillissement dont l'intégrande contient le produit d'une part d'un indicateur de contrainte ($T_m(u)$, $T_s(u)$) représentatif de l'intensité de l'effort, et plus particulièrement de l'intensité du couple, exercé par un organe actionneur (2, 3) du mécanisme de direction, tel que le volant de conduite (3) et/ou le moteur d'assistance (2), et d'autre part de la vitesse de déplacement, et plus particulièrement de la vitesse de rotation ($\omega_m$), dudit organe actionneur (2, 3).

7. Procédé selon la revendication 6 **caractérisé en ce que** l'organe actionneur considéré est le moteur d'assistance (2), de telle sorte que l'on calcule une valeur de vieillissement selon une troisième fonction de vieillissement (ene) représentative de l'énergie délivrée par le moteur d'assistance (2), ladite troisième fonction de vieillissement étant donnée par:

$$ene(t) = \int_0^t \left| T_m(u) \cdot \omega_m(u) \right| du \,,$$ où $T_m(u)$ repré-

sente la consigne de couple moteur ou bien la mesure du couple d'assistance délivré par le moteur d'assistance (2) à l'instant $\underline{u}$, et $\omega_m(u)$ représente la vitesse de rotation de l'arbre (13) du moteur d'assistance (2) à ce même instant $\underline{u}$.

8. Procédé selon l'une des revendications précédentes **caractérisé en ce que** l'on évalue le vieillissement absolu du mécanisme de direction, en effectuant le calcul intégral de la fonction de vieillissement sur une période temporelle [0, t] globale dont l'origine (0) correspond à la première mise en service du mécanisme de direction (1), ou, plus particulièrement, à la première mise en circulation du véhicule qu'équipe ledit mécanisme de direction.

9. Support de données lisible par un ordinateur et contenant des éléments de code de programme informatique assurant l'exécution d'un procédé selon l'une quelconque des revendications précédentes lorsque ledit support est lu par un ordinateur.

10. Véhicule automobile équipé d'un système de direction assistée piloté par un module de commande conçu pour mettre en oeuvre un procédé selon l'une quelconque des revendications 1 à 8.

**Patentansprüche**

1. Verfahren zur Verwaltung einer Servolenkung, einen Lenkmechanismus (1) umfassend, Verfahren zur Verwaltung, im Laufe dessen man das Alter des besagten Lenkmechanismus (1) anhand eines Verfahrens zum Schätzen der Alterung bestimmt, dem entsprechend man einen "Alterungswert" genannten Wert entsprechend einer Alterungsfunktion (old, old2, ene) berechnet, die über die Zeit dem Integral eines Terms entspricht, der durch einen Beanspruchungsindikator ($T_m(u)$, $T_s(u)$) gewichtet wird, dessen Wert zu jedem angenommenen Zeitpunkt (u) repräsentativ für die Intensität einer Beaufschlagungskraft ($T_m$, $T_s$) ist, die durch den besagten Lenkmechanismus (1) zu dem besagten angenommenen Zeitpunkt erfahren wird, wobei das besagte Verfahren zur Verwaltung **dadurch gekennzeichnet ist, dass** man danach je nach dem so bestimmten Alter, zumindest ein Unterstützungsgesetz und/ oder ein durch ein Unterstützungsgesetz der besagten Servolenkung verwendetes Reibungsmodell, und/ oder zumindest eine Elastizitätslasttabelle anpasst, die die Steifigkeit eines beweglichen Organs des Lenkmechanismus (1) und/ oder die Steifigkeit der kinematischen Verbindung zwischen zwei beweglichen Organen des Lenkmechanismus kennzeichnet.

2. Verfahren nach Anspruch 1, **dadurch gekennzeichnet, dass** man den Alterungswert als Änderungsparameter eines Reibungsmodells verwendet, der es erlaubt, die interne Reibung zu bewerten, die sich den Manövern der Lenkung entgegenstellt, um dynamisch im Laufe der Zeit, in Abhängigkeit vom Alter des Mechanismus (1) eine Reibungskompensation, vorzugsweise durch Verringern der besagten Reibungskompensation, mit zunehmender Alterung des Mechanismus anzupassen.

3. Verfahren nach Anspruch 1 oder 2, **dadurch gekennzeichnet, dass** der Beanspruchungsindikator ($T_m(u)$, $T_s(u)$), da der Lenkmechanismus (1) zumindest ein Stellorgan (2, 3) in der Art eines Lenkrades (3) und/oder eines Unterstützungsmotors (2) umfasst, das mit zumindest einem Ausführungsorgan (9, 10) in der Art eines gelenkten Rades durch zumindest eine kinematische Antriebskette (4, 5, 6, 7, 8, 11) verbunden ist, repräsentativ für die Intensität der Beaufschlagungskraft ($T_m$, $T_s$) ist, die durch ein Stellorgan (2) ausgeübt wird, oder jeweils für die Intensität der Manövrierkräfte, die zur selben Zeit durch mehrere Stellorgane (2, 3) auf die kinematische Antriebskette ausgeübt werden, wobei der besagte Beanspruchungsindikator vorzugsweise ausgewählt wird aus: dem Momentsollwert ($T_m$), der auf den Unterstützungsmotor (2) angewendet wird, dem Messwert des Unterstützungsmoments ($T_{assist}$), der tatsächlich durch den Unterstützungsmotor (2) geliefert wird, oder dem Messwert des Lenkradmoments ($T_s$), der durch den Lenker auf das Lenkrad (3) ausgeübt wird.

4. Verfahren nach einem der vorstehenden Ansprüche, **dadurch gekennzeichnet, dass** man, da der Lenkmechanismus (1) einen Unterstützungsmotor (2) umfasst, einen Alterungswert entsprechend einer ersten Alterungsfunktion (old) berechnet, die repräsentativ für die Alterung relativ zur Aktion des Unterstützungsmotors (2) ist, wobei die besagte erste Alterungsfunktion gegeben ist, durch:

$$old(t) = \int_0^t \left| T_m(u) \right| du \,,$$ wobei $T_m(u)$ den Motormo-

mentsollwert repräsentiert, der auf den Unterstützungsmotor (2) angewendet wird, oder den Messwert des Unterstützungsmoments, der durch den Unterstützungsmotor (2) zum Zeitpunkt $\underline{u}$ geliefert wird.

5. Verfahren nach einem der vorstehenden Ansprüche, **dadurch gekennzeichnet, dass** man, da der Lenkmechanismus (1) ein Lenkrad (3) umfasst, einen Alterungswert entsprechend einer zweiten Alterungsfunktion (old2) berechnet, die repräsentativ für die Alterung relativ zur Aktion des Lenkrads (3) ist, wobei die besagte zweite Alterungsfunktion gegeben ist,

durch: $old2(t) = \int_0^t |T_s(u)| du$ , wobei $T_s$(u) den Messwert zum Zeitpunkt u des Lenkradmoments repräsentiert, das durch den Lenker auf das Lenkrad (3) ausgeübt wird.

6. Verfahren nach einem der vorstehenden Ansprüche, **dadurch gekennzeichnet, dass** man einen Alterungswert entsprechend einer Alterungsfunktion berechnet, deren Integrand das Produkt eines Teils eines Beanspruchungsindikators ($T_m$(u), $T_s$(u)) enthält, der repräsentativ für die Intensität der Kraft ist, und genauer gesagt für die Intensität des Moments, das durch ein Stellorgan (2, 3) des Lenkmechanismus, wie das Lenkrad (3) und/ oder den Unterstützungsmotor (2) ausgeübt wird, und andererseits der Fortbewegungsgeschwindigkeit, und genauer gesagt, der Rotationsgeschwindigkeit ($\omega_m$) des besagten Stellorgans (2, 3).

7. Verfahren nach Anspruch 6, **dadurch gekennzeichnet, dass** das angenommene Stellorgan der Unterstützungsmotor (2) ist, sodass man einen Alterungswert entsprechend einer dritten Alterungsfunktion (ene) berechnet, die repräsentativ für die Energie ist, die durch den Unterstützungsmotor (2) geliefert wird, wobei die besagte dritte Alterungsfunktion gegeben ist, durch: $ene(t) = \int_0^t |T_m(u) \cdot \omega_m(u)| du$ , wobei $T_m$(u) den Motormomentsollwert repräsentiert, der durch den Unterstützungsmotor (2) zum Zeitpunkt u geliefert wird, und $\omega_m$(u) die Rotationsgeschwindigkeit der Welle (13) des Unterstützungsmotors (2) zu diesem selben Zeitpunkt u repräsentiert.

8. Verfahren nach einem der vorstehenden Ansprüche, **dadurch gekennzeichnet, dass** man die absolute Alterung des Lenkmechanismus bewertet, indem man die Integralberechnung der Alterungsfunktion über eine globale Zeitperiode [0, t] durchführt, deren Ursprung (0) der ersten Inbetriebnahme des Lenkmechanismus (1), oder genauer gesagt, dem ersten Inverkehrbringen des Fahrzeugs entspricht, das mit dem besagten Lenkmechanismus ausgerüstet ist.

9. Von einem Computer lesbarer Datenträger und Computerprogrammcode-Elemente enthaltend, die für die Ausführung eines Verfahrens nach einem der vorstehenden Ansprüche sorgen, wenn der besagte Träger von einem Computer gelesen wird.

10. Kraftfahrzeug, das mit einem Servolenkungssystem ausgerüstet ist, das durch ein Steuerungsmodul gesteuert wird, das gestaltet ist, um ein Verfahren nach einem der Ansprüche 1 bis 8 auszuführen.

**Claims**

1. A method for managing a power steering comprising a steering mechanism (1), management method during which the age of said steering mechanism (1) is determined by means of an aging estimation method according to which a value called "aging value" is calculated according to an aging function (old, old2, ene) which corresponds to the integral, over time, of an expression which is weighted by a stress indicator ($T_m$(u), $T_s$(u)) whose value at each considered moment (u) is representative of the intensity of a biasing force ($T_m$, $T_s$) which is experienced by said steering mechanism (1) at said considered moment, said management method being **characterized in that** it comprises adapting afterwards, as a function of the age determined thereby, at least one assist law and/or one friction model used by an assist law of said power steering and/or at least one elasticity chart which characterizes the stiffness of a movable member of the steering mechanism (1) and/or the stiffness of the kinematic link between two movable members of the steering mechanism.

2. The method according to claim 1, **characterized in that** the aging value is used as a parameter modifying a friction model allowing to evaluate the inner friction which opposes the maneuvers of the steering, in order to adjust dynamically, over time, according to the age of the mechanism (1), a compensation of the friction, preferably by reducing said friction compensation with the increasing aging of the mechanism.

3. The method according to claim 1 or 2, **characterized in that**, with the steering mechanism (1) comprising at least one actuator member (2, 3), of the steering wheel (3) and/or assist motor (2) kind, which is linked to at least one effector member (9, 10), of the steered wheel kind, by at least one driving kinematic chain (4, 5, 6, 7, 8, 11), the stress indicator ($T_m$(u), $T_s$(u)) is representative of the intensity of the maneuver force ($T_m$, $T_s$) which is exerted by an actuator member (2) or, respectively, of the intensity of the maneuver forces which are simultaneously exerted by several actuator members (2, 3), on the driving kinematic chain, said stress indicator being preferably selected from: the torque setpoint ($T_m$) which is applied to the assist motor (2), the measurement of the assist torque ($T_{assist}$) which is actually delivered by the assist motor (2), or the measurement of the steering wheel torque ($T_s$) which is exerted by the driver on the steering wheel (3).

**4.** The method according to any of the preceding claims, **characterized in that**, with the steering mechanism (1) comprising an assist motor (2), an aging value is calculated according to a first aging function (old) representative of the aging related to the action of the assist motor (2), said first aging function being given by: $old(t) = \int_0^t |T_m(u)| du$ , where $T_m(u)$ represents the motor torque setpoint applied to the assist motor (2), or the measurement of the assist torque delivered by the assist motor (2) at the moment $\underline{u}$.

**5.** The method according to any of the preceding claims, **characterized in that**, with the steering mechanism (1) comprising a steering wheel (3), an aging value is calculated according to a second aging function (old2) representative of the aging related to the action of the steering wheel (3), said second aging function being given by:

$$old2(t) = \int_0^t |T_s(u)| du ,$$ where $T_s(u)$ represents the measurement at the moment $\underline{u}$ of the steering wheel torque which is exerted by the driver on the steering wheel (3).

**6.** The method according to any of the preceding claims, **characterized in that** an aging value is calculated according to an aging function whose integrand contains the product, on the one hand, of a stress indicator ($T_m(u)$, $T_s(u)$) representative of the intensity of the force, and more particularly of the intensity of the torque, exerted by an actuator member (2, 3) of the steering mechanism, such as the steering wheel (3) and/or the assist motor (2) and, on the other hand, of the displacement speed, and more particularly of the rotational speed ($\omega_m$), of said actuator member (2, 3).

**7.** The method according to claim 6, **characterized in that** the considered actuator member is the assist motor (2), so that an aging value is calculated according to a third aging function (ene) representative of the energy delivered by the assist motor (2), said third aging function being given by:

$$ene(t) = \int_0^t |T_m(u).\omega_m(u)| du ,$$ where $T_m(u)$ represents the motor torque setpoint or the measurement of the assist torque delivered by the assist motor (2) at the moment $\underline{u}$, and $\omega_m(u)$ represents the rotational speed of the shaft (13) of the assist motor (2) at this same moment $\underline{u}$.

**8.** The method according to any of the preceding claims, **characterized in that** the absolute aging of the steering mechanism is evaluated by carrying out the integral calculation of the aging function over an overall time period [0, t] whose origin (0) corresponds to the first operationalization of the steering mechanism (1) or, more particularly, to the first circulation of the vehicle equipped by said steering mechanism.

**9.** A computer-readable data medium containing computer program code elements carrying out the execution of a method according to any one of the preceding claims when said support is read by a computer.

**10.** A motor vehicle equipped with a power steering system driven by a control module designed to implement a method according to any one of claims 1 to 8.

*Fig. 1*

**EP 3 129 273 B1**

**RÉFÉRENCES CITÉES DANS LA DESCRIPTION**

**Documents brevets cités dans la description**

- EP 1306287 A